# EUROPEAN PATENT APPLICATION

(11) **EP 4 671 635 A1**
(43) Date of publication of application: **31.12.2025**
(21) Application number: 25182687.1
(22) Date of filing: 13.06.2025
(51) Int. Cl.: F24F 8/22, F24F 8/80

(54) **EXPANDABLE CLEANING DEVICE**

(30) Priority: 25.06.2024 TW 113123563
(71) Applicant: Microjet Technology Co., Ltd., Hsinchu (TW)
(72) Inventor: Mou, Hao-Jan, Hsinchu (TW); Wu, Chin-Chuan, Hsinchu (TW); Huang, Chi-Feng, Hsinchu (TW)
(74) Representative: Uexküll & Stolberg

(57) **Abstract**

An expandable cleaning device includes a flow guiding main body (1) including a flow guiding pathway (11) extendable in longitudinal/lateral direction to form expanded flow guiding path, fluidly communicated with a gas entrance (12) and a gas exit (13); a filtration element (2) disposed in the flow guiding pathway (11) and covering the gas entrance (12) for filtering air pollution; a gas guider (3) having a CADR for guiding air pollution into the flow guiding pathway (11); and a networking controller (A) receiving a control instruction for activating the gas guider (3), wherein after a required equivalent of CADR of indoor field is intelligently computed, and a number of gas guider (3) and an optimal CADR thereof are decided, an assembled expandable cleaning device complying with the required equivalent of CADR is formed by the flow guiding main body (1) to provide the expanded flow guiding path for disposing the gas guider (3), thereby achieving a purification procedure the air pollution close to zero.

## Description

### FIELD OF THE INVENTION

The present disclosure relates to an expandable cleaning device, and more particularly to an expandable cleaning device which is capable of connecting to an indoor air pollution prevention system for detecting and cleaning air pollution to a level close to zero.

### BACKGROUND OF THE INVENTION

People are placing increasing importance on the quality of the air in their surroundings. Suspended particles, such as PM₁, PM₂₅, PM₁₀, carbon dioxide, total volatile organic compounds (TVOC), and formaldehyde, even particles, aerosols, bacteria, viruses contained in the air, are all exposed in the environment to affect the human health, and even endanger the life seriously.

It is not easy to control the indoor air quality. Besides the outdoor air quality, indoor air-conditioning conditions and pollution sources are the major factors affecting the indoor air quality, especially dusts, bacteria and viruses caused by poor indoor air circulation.

In view of this, for achieving the indoor air pollution prevention system in the space of indoor field to clean the air pollution to level close to zero, it is necessary of disposing the cleaning device. Further, the cleaning efficiency of a general cleaning device in a space is about 20~1000 Clean Air Delivery Rate (CADR), so that it takes longer time to process the air pollution in the space of the indoor file. If wants to speed up, it needs to increase the number of the cleaning devices to increase the processing efficiency, but this will also increase the cost. Increasing too many cleaning devices means will also result in a waste of installation cost. Besides, the general cleaning device cannot achieve real-time monitoring and effective processing anytime and anywhere. Therefore, it is a main subject in the present disclosure to achieve the best processing efficiency of air pollution cleaning and installation cost in a large space, to dispose the cleaning devices in a best manner to achieve the indoor air pollution prevention system in the space of indoor field to clean the air pollution to level close to zero so as to reduce the harmful gas to be breathed in the indoor space, to real-time detect and real-time monitor and eliminate, to effectively control the energy-saving benefits of the operation of the cleaning device, and to quickly purify the indoor air.

### SUMMARY OF THE INVENTION

An object of the present disclosure is to provide an expandable cleaning device which connects to the indoor air pollution prevention system for purifying the air pollution in the space of the indoor field to a level close to zero. After a required equivalent of CADR of the indoor field is decided by the indoor air pollution prevention system through the intelligent (AI) computation, and a number of the gas guider and an optimal CADR of the gas guider for achieving the required equivalent of CADR are decided according thereto an assembled expandable cleaning device complying with the required equivalent of CADR is formed by a corresponding number of the flow guiding main body to provide the expanded flow guiding path, which is formed by longitudinally/laterally extending the flow guiding pathway, for disposing the gas guider; at the same time, through the networking controller connecting to the indoor air pollution prevention system, the air quality of the indoor field can be monitored anytime and anywhere for activating and controlling the operation of the gas guider in real time; and also, the air pollution in the indoor field also can be detected to perform an intelligent comparison with the environment air quality, thereby adjusting the guiding air volume of the gas guider in real time based on the air quality, and thus effectively controlling the operation of the cleaning device in an energy saving manner. In addition, the optimal CADR of the gas guider in the flow guiding pathway is selected based on the upper limit of noise tolerance and the tolerance time of the indoor field, thereby reducing the operation noises of the gas guider in the indoor field. Accordingly, the assembled expandable cleaning device is capable of achieving the purification procedure for reaching cleanroom class with a level of air pollution close to zero through detecting the air pollution in real time, and thus achieving the optimal cost effectiveness thereof.

In accordance with a broader aspect of the present disclosure, an expandable cleaning device includes a flow guiding main body comprising a flow guiding pathway capable of being extended in a longitudinal direction and/or in a lateral direction to form an expanded flow guiding path, wherein the flow guiding pathway is fluidly communicated with at least one gas entrance and at least gas exit for guiding an air pollution into an indoor filed; at least one filtration element disposed in the flow guiding pathway and covering the at least one gas entrance for filtering the air pollution inhaling from the indoor field; at least one gas guider having a fixed Clean Air Delivery Rate (CADR) and disposed in the flow guiding pathway for guiding the air pollution into the flow guiding pathway to pass through the filtration element, so as to filter and clean the air pollution to a level close to zero; and at least one networking controller receiving a control instruction from an indoor air pollution prevention system through a network communication for activating an operation of the gas guider, wherein after a required equivalent of CADR of the indoor field is decided by the indoor air pollution prevention system through an intelligent (AI) computation, and a number of the at least one gas guider and an optimal CADR of each of the at least one gas guider for achieving the required equivalent of CADR are decided according thereto, an assembled expandable cleaning device complying with the required equivalent of CADR is formed by a corresponding number of the flow guiding main body to provide the expanded flow guiding path, which is formed by longitudinally/laterally extending the flow guiding pathway, for disposing the required number of the at least one gas guider, thereby achieving a purification procedure for reaching a cleanroom class with a level of the air pollution close to zero through detecting the air pollution in real time, and thus achieving an optimal cost effectiveness thereof.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1A is a schematic view illustrating an expandable cleaning device and assembling of expandable cleaning devices in longitudinal direction according to embodiments of the present disclosure;
FIG. 1B is a schematic cross-sectional view illustrating two expandable cleaning devices assembled in longitudinal direction in FIG. 1A along a plane parallel to the longitudinal direction;
FIG. 1C is a schematic cross-sectional view illustrating the expandable cleaning device in FIG. 1A along a plane perpendicular to the longitudinal direction;
FIG. 1D is a schematic view illustrating assembling of two expandable cleaning devices in lateral direction according to an embodiment of the present disclosure;
FIG. 1E is a schematic cross-sectional view illustrating the assembled expandable cleaning devices in FIG. 1D along a plane parallel to the lateral direction;
FIG. 2 is a schematic perspective view illustrating a gas detection module according to an embodiment of the present disclosure;
FIG. 3A is a schematic perspective view (1) illustrating a gas detection main part of the gas detection module according to the embodiment of the present disclosure;
FIG. 3B is a schematic perspective view (2) illustrating the gas detection main part of the gas detection module according to the embodiment of the present disclosure;
FIG. 4 is a schematic exploded view illustrating the gas detection main part of the gas detection module according to the embodiment of the present disclosure;
FIG. 5A is a schematic view (1) illustrating a base of the gas detection main part according to the embodiment of the present disclosure;
FIG. 5B is a schematic view (2) illustrating the base of the gas detection main part according to the embodiment of the present disclosure;
FIG. 6 is a schematic view (3) illustrating the base of the gas detection main part according to the embodiment of the present disclosure;
FIG. 7A is a schematic exploded view illustrating a piezoelectric actuator and the base of the gas detection main part according to the embodiment of the present disclosure;
FIG. 7B is a schematic view illustrating the combination of the piezoelectric actuator and the base of the gas detection main part according to the embodiment of the present disclosure;
FIG. 8A is a schematic exploded view (1) illustrating the piezoelectric actuator according to the embodiment of the present disclosure;
FIG. 8B is a schematic exploded view (2) illustrating the piezoelectric actuator according to the embodiment of the present disclosure;
FIG. 9A is a cross-sectional view (1) illustrating an action of the piezoelectric actuator according to the embodiment of the present disclosure;
FIG. 9B is a schematic cross-sectional view (2) illustrating an action of the piezoelectric actuator according to the embodiment of the present disclosure;
FIG. 9C is a schematic cross-sectional view (3) illustrating an action of the piezoelectric actuator according to the embodiment of the present disclosure;
FIG. 10A is a schematic cross-sectional view (1) illustrating the gas detection main part according to the embodiment of the present disclosure;
FIG. 10B is a schematic cross-sectional view (2) illustrating the gas detection main part according to the embodiment of the present disclosure;
FIG. 10C is a schematic cross-sectional view (3) illustrating the gas detection main part according to the embodiment of the present disclosure;
FIG. 11 is a block diagram illustrating the communication of the gas detection module according to the embodiment of the present disclosure; and
FIG. 12 is a comparison table showing required equivalents of clean air delivery rate (CADR) per cubic meter for ZAPClean room 1~12.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

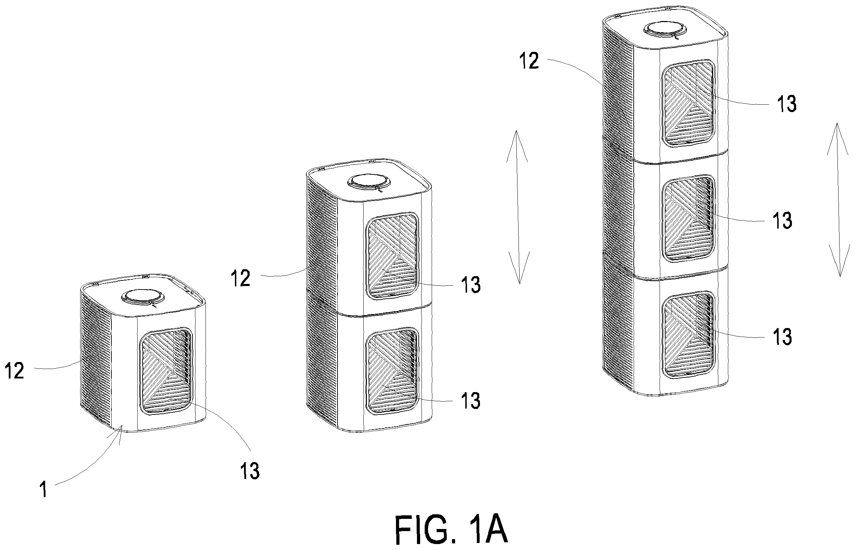

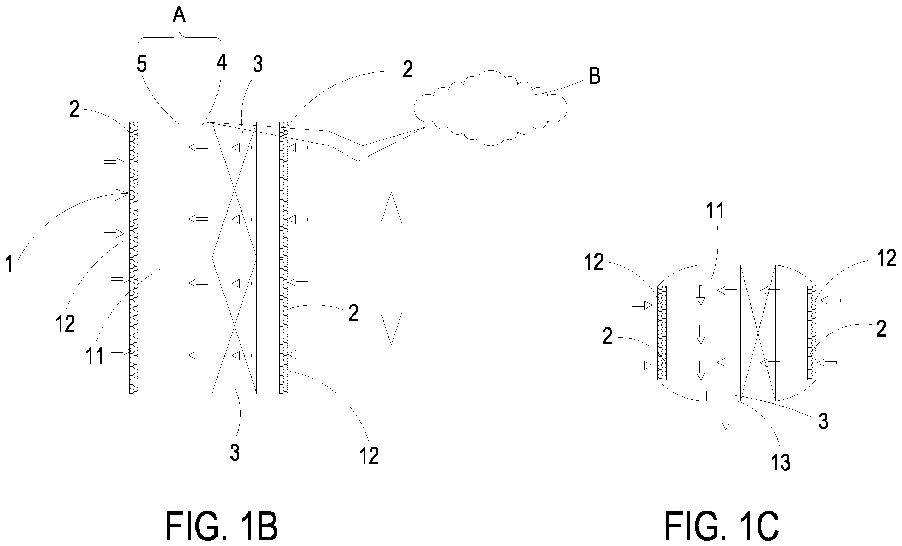

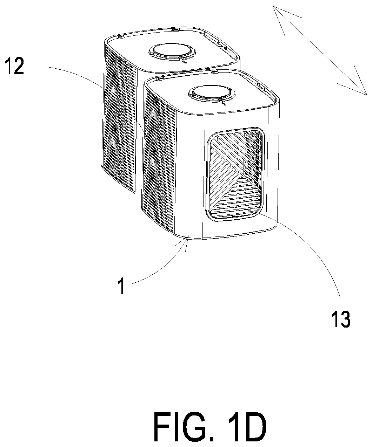

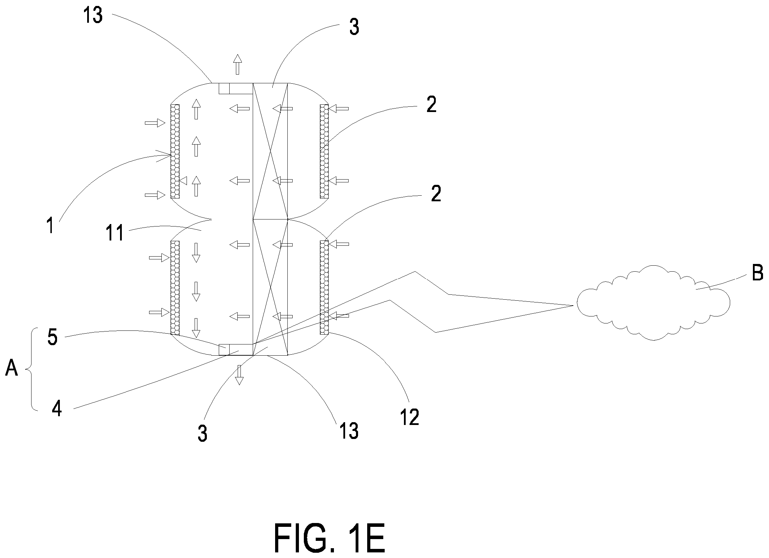

Please refer to FIG. 1 to FIG. 1E. The present disclosure provides an expandable cleaning device applied to an indoor air pollution prevention system. The expandable cleaning device mainly includes a flow guiding main body 1, at least one filtration element 2, at least one gas guider 3 and at least one networking controller A. The flow guiding body 1 includes a flow guiding pathway 11 which can be extended in a longitudinal direction and/or in a lateral direction to form an expanded flow guiding path. The flow guiding pathway 11 is fluidly communicated with at least one gas entrance 12 and at least gas exit 13 for guiding the air pollution into the indoor filed. The at least one filtration element 2 is disposed in the flow guiding pathway 11 and covers the gas entrance 12, so that the air pollution inhaling from the indoor field may pass therethrough. The at least one gas guider 3 has a fixed Clean Air Delivery Rate (CADR) and is disposed in the flow guiding pathway 11 for guiding the air pollution into the flow guiding pathway 11 to pass through the filtration element 2, so as to filter and clean the air pollution to a level close to zero. The at least one networking controller A receives a control instruction from an indoor air pollution prevention system B through a network communication for activating an operation of the gas guider 3. After a required equivalent of CADR of the indoor field is decided by the indoor air pollution prevention system B through the intelligent (AI) computation, and a number of the gas guider 3 and an optimal CADR of the gas guider 3 for achieving the required equivalent of CADR are decided according thereto, an assembled expandable cleaning device complying with the required equivalent of CADR is formed by a corresponding number of the flow guiding main body 1 to provide the expanded flow guiding path, which is formed by longitudinally/laterally extending the flow guiding pathway 11, for disposing the gas guider 3, thereby achieving a purification procedure for reaching cleanroom class with a level of the air pollution close to zero through real time air pollution detection, and thus achieving the optimal cost effectiveness thereof.

Notably, the Clean Air Delivery Rate (CADR) of one single gas guider 3 mentioned above is at least greater than 150 m³/h.

In accordance with the descriptions above, in the expandable cleaning device provided in the present disclosure, if the optimal CADR of the gas guider 3 is 1200 m³/h, it can be implemented as the following configurations.
1. One kind configuration, as the expandable cleaning device shown in the left of FIG. 1A, is to arrange one single gas guider 3 having CADR of 1200 m³/h in the flow guiding pathway 11 of the flow guiding main body 1. The gas guider 3 can guide the air pollution to enter the flow guiding main body 1 from the gas entrances 12 at two sides to pass through the filtration elements 2 for filtration, and the purified gas is further guided to exhale to the indoor field through the gas exit 13 (as shown in FIG. 1C).
2. One kind of configuration, as the expandable cleaning devices shown in the middle or right of FIG. 1A, is to arrange plural gas guiders 3 in the flow guiding pathways 11 of the flowing guiding main bodies 1 assembled along longitudinal direction. For the configuration in the middle of FIG. 1A, two gas guiders 3 having CADR of 600 m³/h are cooperated, and for the configuration in the right of FIG. 1A, three gas guiders 3 having CADR of 400 m³/h are cooperated. The gas guiders 3 can guide the air pollution to enter the flow guiding main bodies 1 from the gas entrances 12 at two sides to pass through the filtration elements 2 for filtration (as shown in FIG. 1B), and the purified gas is further guided to exhale to the indoor field through the gas exits 13 (as shown in FIG. 1A).
3. One kind of configuration, as the expandable cleaning devices shown in FIG. 1D, is to arrange plural gas guiders 3 in the flow guiding pathways 11 of the flowing guiding main bodies 1 assembled along lateral direction, in which two gas guiders 3 having CADR of 600 m³/h are cooperated. The gas guiders 3 can guide the air pollution to enter the flow guiding main bodies 1 from the gas entrances 12 at two sides to pass through the filtration elements 2 for filtration, and the purified gas is further guided to exhale to the indoor field through the gas exits 13 (as shown in FIG. 1E).

Certainly, the optimal CADR of the gas guider 3 of the expandable cleaning device is not limited thereto. It can select to dispose plural sets of assembled expandable cleaning devices in accordance with the space of the indoor field, and select different numbers of gas guiders 3 and different optimal CADR thereof based on the required equivalent of CADR of the space of the indoor field to form the assembled expandable cleaning device, so as to achieve the required equivalent of CADR in the required space of the indoor field, thereby performing the purification procedure for reaching cleanroom class with a level of air pollution close to zero, and thus achieving the optimal cost effectiveness thereof. Notably, the arrangement of the gas guiders 3 and the selection of optimal CADR of the gas guiders 3 in the flow guiding pathways 11 in each assembled expandable cleaning device also can be decided based on the upper limit of noise tolerance and the tolerance time of the indoor field. For example, in the indoor field, the upper limit of noise tolerance is 70 decibels (dB) and the tolerance time is 3 minutes, and if the configuration of single gas guider 3 having optimal CADR of 1200 m³/h arranged in single expandable cleaning device can achieve the required equivalent of CADR of the indoor filed but generate noises exceeding 70 decibels for more than 3 minutes during operation, then the configuration would be unsuitable. Accordingly, it can select to employ two gas guiders 3 having optimal CADR of 600 m³/h arranged in the expanded flow guiding path formed by the flow guiding paths 11 in the longitudinally/laterally assembled expandable cleaning devices, so that the required equivalent of CADR of the indoor filed can be achieved as the single gas guider 3 having optimal CADR of 1200 m³/h without exceeding the limitation of 70 decibels for 3 minutes, thereby performing the purification procedure for reaching cleanroom class with a level of air pollution close to zero. Alternatively, it also can select to employ three gas guiders 3 having optimal CADR of 400 m³/h arranged in the expanded flow guiding path formed by the flow guiding paths 11 in the longitudinally/laterally assembled expandable cleaning devices, so that the required equivalent of CADR of the indoor filed can be achieved as the single gas guider 3 having optimal CADR of 1200 m³/h without exceeding the limitation of 70 decibels for 3 minutes, thereby performing the purification procedure for reaching cleanroom class with a level of air pollution close to zero. Therefore, the configuration of expandable cleaning device(s) can be adjusted in accordance with the space, the required equivalent of CADR, and the upper limit of noise tolerance and the tolerance time of the indoor filed in practical situations, and the number of the gas guider(s) 3 and the optimal CADR thereof can be arranged and selected to reduce the noises in the indoor field, so as to form an assembled expandable cleaning devices capable of performing the purification procedure for achieving the required equivalent of CADR of the indoor filed to reach cleanroom class with a level of air pollution close to zero. Notably, the requirements of cleanroom classes of the indoor field in the present disclosure are ZAPClean room 1~12.

In accordance with the descriptions above, the expandable cleaning device in the present disclosure provides the flow guiding main body 1 having the flow guiding pathway 11 which can be extended in longitudinal/lateral direction to form the expanded flow guiding path, so as to cooperate with the required number of gas guider 3 and the selected optimal CADR thereof, thereby configuring the assembled expandable cleaning device complying with the required equivalent of CADR for the space of the indoor field. Moreover, the expandable cleaning device in the present disclosure can further connect to the indoor air pollution prevention system B through the networking controller A, and the indoor air pollution prevention system B can perform an intelligent (AI) computation based on the big data database to decide the disposition number of the assembled expandable cleaning device, and the number of the gas guider 3 in each assembled expandable cleaning device and respective optimal CADR thereof, so that the air quality of the indoor field can be monitored anytime and anywhere, and at the same time, the air pollution in the indoor field also can be detected to perform an intelligent comparison with the environmental air quality, thereby adjusting the guiding air volume of the gas guider 3 in real time based on the air quality, and thus effectively controlling the operation of the cleaning device in an energy saving manner.

Following is a preferred embodiment of the expandable cleaning device in the present disclosure.

For achieving the required equivalent of CADR, the disposition number of the gas guider 3 and the optimal CADR thereof in the expandable cleaning device of the present disclosure are decided by the intelligent (AI) computation performed by the indoor air pollution prevention system B based on the big data database. It only needs to input the location of the indoor field into the indoor air pollution prevention system B, and the required equivalent of CADR for the indoor field can be obtained.

In an example, after knowing that the indoor field is located in Taipei, the area of the indoor field is 9.917 square meters, and the cleanness requirement is ZAPClean room 9, the required number of the gas guider 3 and the optimal CADR thereof in the expandable cleaning device can be obtained after calculation. The process is as follows:

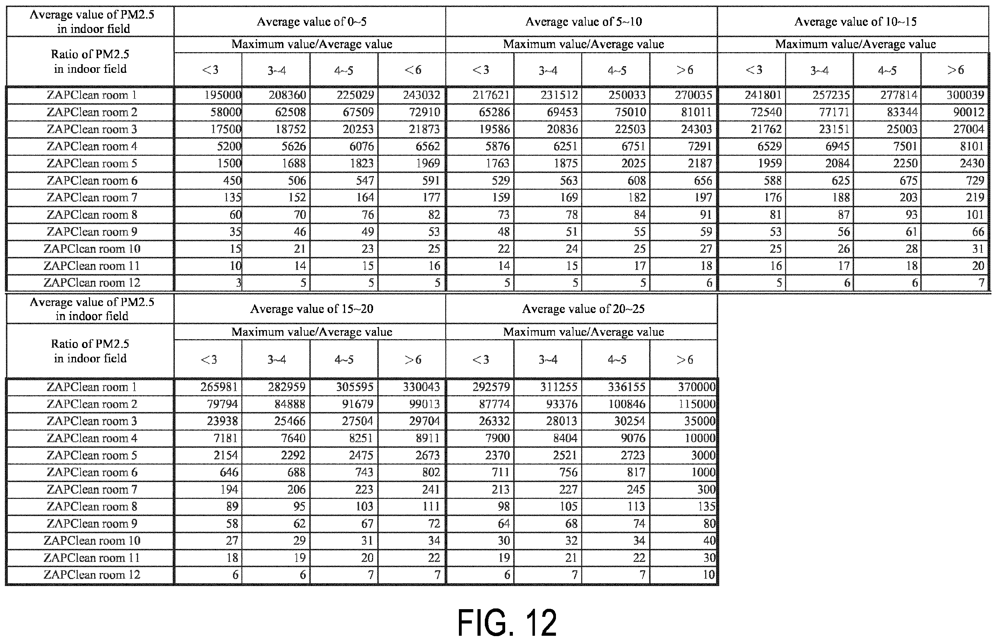

The indoor air pollution prevention system B performs the intelligent computation and analysis based on the big data database and the comparison table showing required equivalents of CADR per cubic meter for ZAPClean room 1~12 as shown in FIG. 12. Notably, the required equivalents of CADR per cubic meter for ZAPClean room 1~12 in the present disclosure are as followed.

The required equivalent of CADR per cubic meter for ZAPClean room 1 is in a range of 195000~370000 m³/h.

The required equivalent of CADR per cubic meter for ZAPClean room 2 is in a range of 58000~115000 m³/h.

The required equivalent of CADR per cubic meter for ZAPClean room 3 is in a range of 17500~35000 m³/h.

The required equivalent of CADR per cubic meter for ZAPClean room 4 is in a range of 5200~10000 m³/h.

The required equivalent of CADR per cubic meter for ZAPClean room 5 is in a range of 1500~3000 m³/h.

The required equivalent of CADR per cubic meter for ZAPClean room 6 is in a range of 450~1000 m³/h.

The required equivalent of CADR per cubic meter for ZAPClean room 7 is in a range of 135~300 m³/h.

The required equivalent of CADR per cubic meter for ZAPClean room 8 is in a range of 60~135 m³/h.

The required equivalent of CADR per cubic meter for ZAPClean room 9 is in a range of 35~80 m³/h.

The required equivalent of CADR per cubic meter for ZAPClean room 10 is in a range of 15~40 m³/h.

The required equivalent of CADR per cubic meter for ZAPClean room 11 is in a range of 10~30 m³/h.

The required equivalent of CADR per cubic meter for ZAPClean room 12 is in a range of 3~10 m³/h.

When inputting the location of the indoor field as Taipei, the indoor air pollution prevention system B performs the intelligent computation based on the big data database and obtains that the maximum value of PM2.5 in Taipei in a period of five years is 37, and the average value is 11.9. The average value 11.9 is within the range of average value of 10~15 in the comparison table, and the ratio of the maximum value 37 to the average value 11.9 is 3.1 which is within the range of 3~4 of maximum value/average value in the comparison table. As the cleanness requirement is ZAPClean room 9, it obtains that for indoor filed in this location, the required equivalent of CADR per cubic meter for ZAPClean room 9 is 52.26 m³/h.

Then, as the space of the indoor field is 26.7 m³, it obtains that the required equivalent of CADR for this indoor field is 26.7 m³ multiplied by 52.26 m³/h equals to 1502 m³/h.

Therefore, the required equivalent of CADR of the gas guider 3 of the expandable cleaning device in the present disclosure is set to be 1500 m³/h for performing the purification procedure for reaching cleanroom class with a level of air pollution close to zero.

In accordance with the descriptions above, as the indoor field is located in Taipei, the area of the indoor field is 9.917 square meters, and the cleanness requirement is ZAPClean room 9, the required optimal CADR of the gas guider 3 in the expandable cleaning device is 1500 m³/h. Considering the area of the indoor field is small, it can select to use one single expandable cleaning device having optimal CADR of 1500 m³/h arranged in the expandable cleaning device. Alternatively, considering the upper limit of noise tolerance is 70 decibels (dB) and the tolerance time is 3 minutes, it can select to assemble the expandable cleaning devices in longitudinal/lateral direction to extend the flow guiding pathway 11 and form the expanded flow guiding path for arranging two gas guiders respectively having the optimal CADR of 800 m³/h and 700 m³/h, so as to configure the assembled expandable cleaning device in an optimal manner. That is, the operation of gas guiders 3 does not exceed the upper limit of noise tolerance of 70 decibels (dB) and the tolerance time of 3 minutes. Certainly, without considering the area of the indoor field, it also can select to arrange five gas guiders 3 respectively having optimal CADR of 300 m³/h, thereby performing the purification procedure for reaching cleanroom class with a level of air pollution close to zero.

Accordingly, the present disclosure provides an expandable cleaning device which connects to the indoor air pollution prevention system B for purifying the air pollution to a level close to zero. The expandable cleaning device provides the flow guiding main body 1 having the flow guiding pathway 11 which can be extended in longitudinal/lateral direction to form the expanded flow guiding path, so as to cooperate with the required number of gas guider 3 and the selected optimal CADR thereof, thereby configuring the assembled expandable cleaning device complying with the required equivalent of CADR. Moreover, the expandable cleaning device can further connect to the indoor air pollution prevention system B through the networking controller A, so that the air quality of the indoor field can be monitored anytime and anywhere for activating and controlling the operation of the gas guider 3 in real time, and at the same time, the air pollution in the indoor field also can be detected to perform an intelligent comparison with the environmental air quality, thereby adjusting the guiding air volume of the gas guider 3 in real time based on the air quality, and thus effectively controlling the operation of the cleaning device in an energy saving manner. Furthermore, after the required equivalent of CADR is decided by the indoor air pollution prevention system B through performing the intelligent (AI) computation, and a number of the gas guider 3 and an optimal CADR of the gas guider 3 for achieving the required equivalent of CADR are decided according thereto, an assembled expandable cleaning device complying with the required equivalent of CADR is formed by a corresponding number of the flow guiding main body 1 to provide the expanded flow guiding path, which is formed by longitudinally/laterally extending the flow guiding pathway 11, for disposing the gas guider 3, wherein the optimal CADR of the gas guider 3 in the flow guiding pathway 11 is selected based on the upper limit of noise tolerance and the tolerance time of the indoor field, thereby reducing the operation noises of the gas guider 3 in the indoor field. Accordingly, the assembled expandable cleaning device is capable of achieving the purification procedure for reaching cleanroom class with a level of air pollution close to zero through detecting the air pollution in real time, and thus achieving the optimal cost effectiveness thereof.

The networking controller A described above includes a driver 4 and a gas detection module 5. The driver 4 and the gas detection module 5 are electrically connected for controlling. The driver 4 receives the control instruction from the indoor air pollution prevention system B through the network communication for controlling the enablement and disablement of the gas guider 3. The gas detection module 5 detects the air pollution and outputs a gas detection data under a surveillance status, and performs a bidirectional communication with the indoor air pollution prevention system B through the network communication. The indoor air pollution prevention system B receives the gas detection data and performs the intelligent comparison for sending out a driving instruction. The gas detection module 5 receives the driving instruction for controlling the enablement and disablement of the gas guider 3 and the air volume of the gas guider 3.

Notably, the air pollution includes at least one selected from the group consisting of particulate matter, carbon monoxide, carbon dioxide, ozone, sulfur dioxide, nitrogen dioxide, lead, total volatile organic compounds (TVOC), formaldehyde, bacteria, fungi, virus and a combination thereof. The surveillance status refers that the air pollution is monitored to make sure whether the gas detection data exceeds a safety detection value. The safety detection value includes at least one selected from the group consisting of less than 35 µg/m³ of the value of PM_{2.5}, less than 1000 ppm of the carbon dioxide content, less than 0.56 ppm of the total volatile organic compounds content, less than 0.08 ppm of the formaldehyde content, less than 1500 CFU/m³ of the amount of bacteria, less than 1000 CFU/m³ of the amount of fungi, less than 0.075 ppm of the sulfur dioxide content, less than 0.1 ppm of the nitrogen dioxide content, less than 9 ppm of the carbon monoxide content, less than 0.06 ppm of the ozone content, and less than 0.15 µg/m³ of the value of lead.

The intelligent comparison refers that after the gas detection module 5 of the networking controller A receives the detected gas detection data from the indoor air pollution prevention system B, a could device connected to the networking controller A performs the intelligent computation for comparing the gas detection data and intelligently selects to send out a driving instruction to the gas detection module 5 of the networking controller A. That is, the driving instruction is intelligently sent out for controlling the enablement and the guiding air volume of the gas guider 3, wherein as the gas detection data is greater than the safety detection value in a respectively greater difference, the air volume of the gas guider 3 is adjusted to be greater, and as the gas detection data is greater than the safety detection value in a respectively smaller difference, the air volume of the gas guider 3 is adjusted to be smaller.

For understanding the implementation of the expandable cleaning device of the present disclosure disposed in the indoor field for detecting and purifying the air pollution in real time, followings are the detailed descriptions of the gas detection module 5.

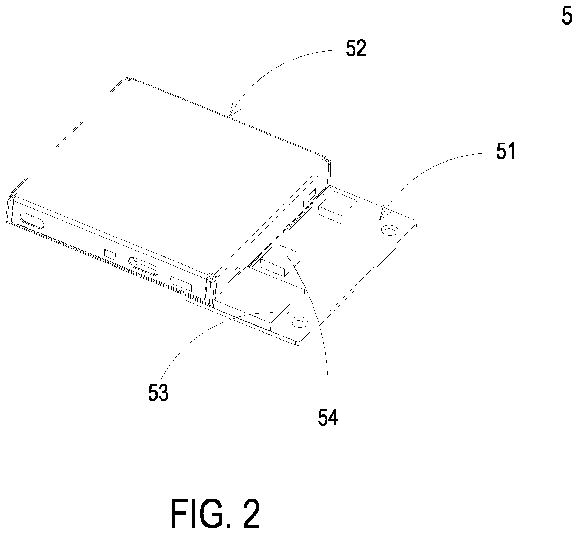

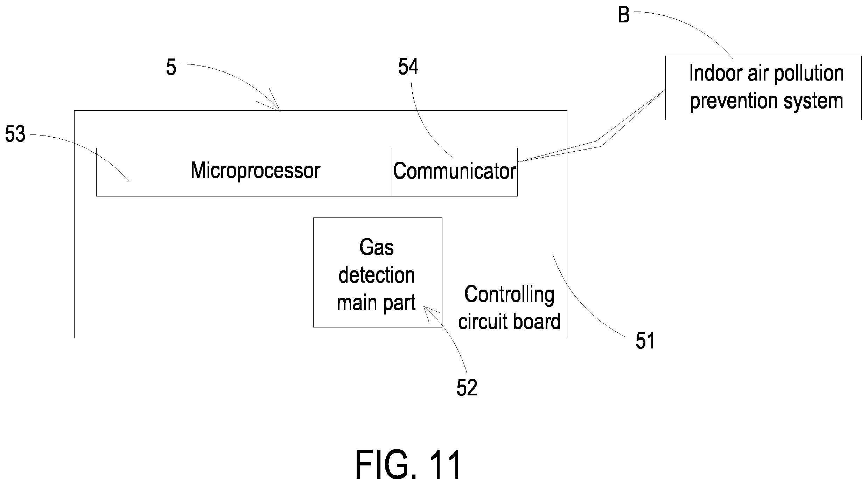

Please refer to FIG. 2 and FIG. 11. In the embodiment, the gas detection module 5 described above includes a controlling circuit board 51, a gas detection main part 52, a microprocessor 53 and a communicator 54. The gas detection main part 52, the microprocessor 53 and the communicator 54 are integrally packaged on the controlling circuit board 51 and electrically connected to each other. The microprocessor 53 controls the detection operation of the gas detection main part 52. The gas detection main part 52 detects the air pollution and outputs a detection signal. The microprocessor 53 receives and processes the detection signal and outputs and provides air pollution data to the communicator 54 for externally transmitting to the indoor air pollution prevention system B.

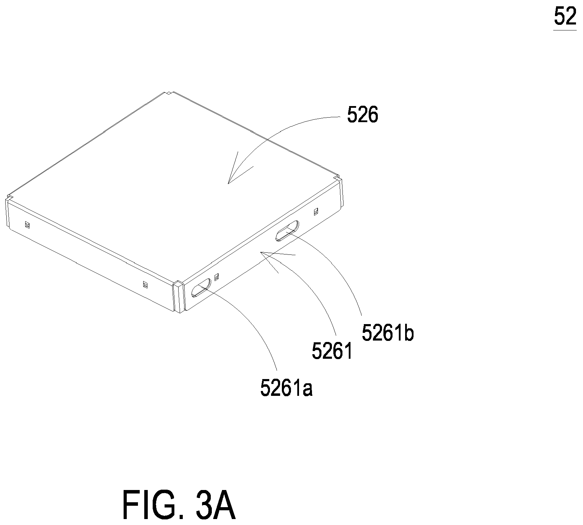

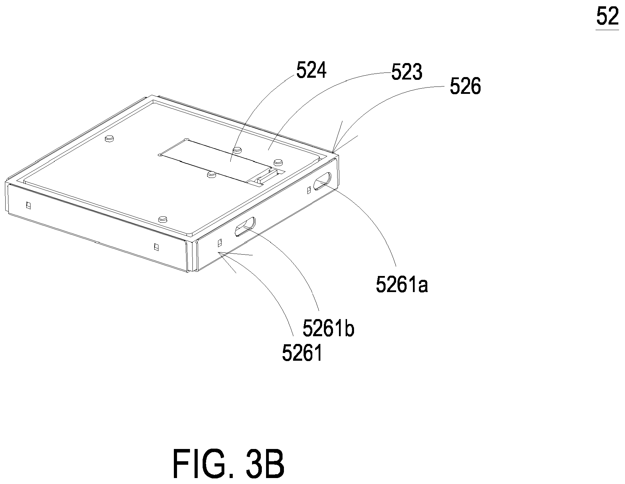

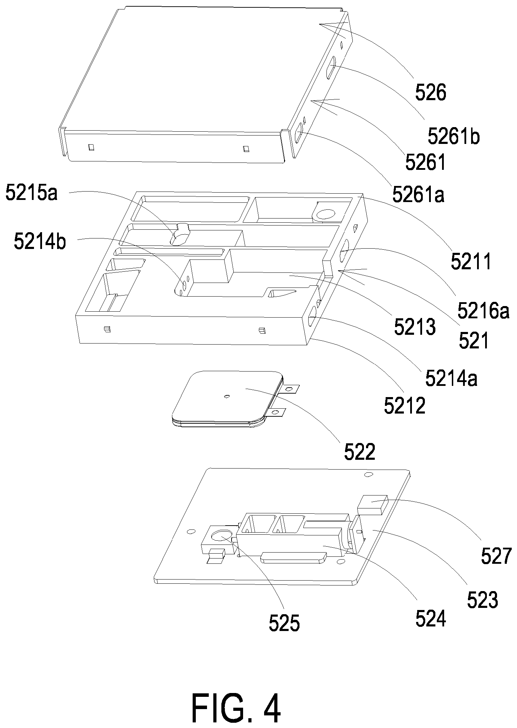

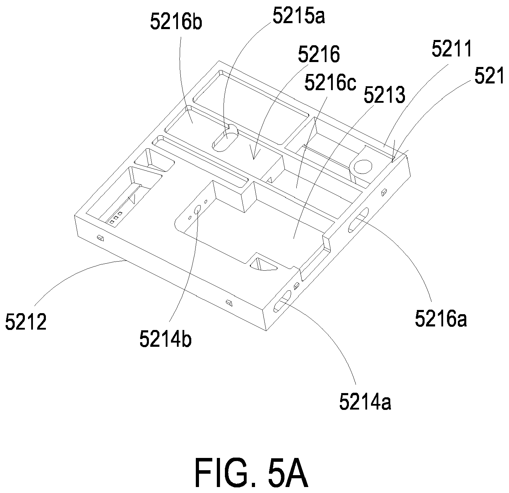

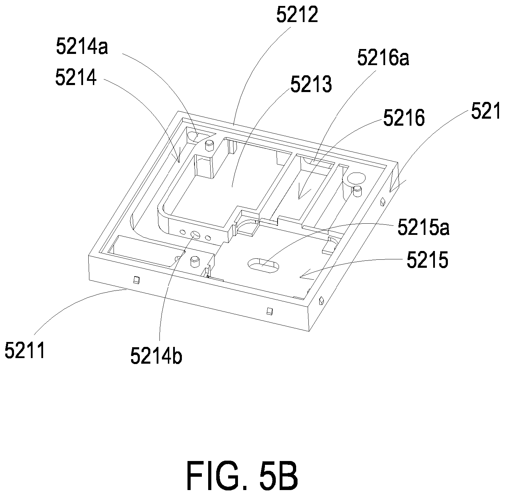

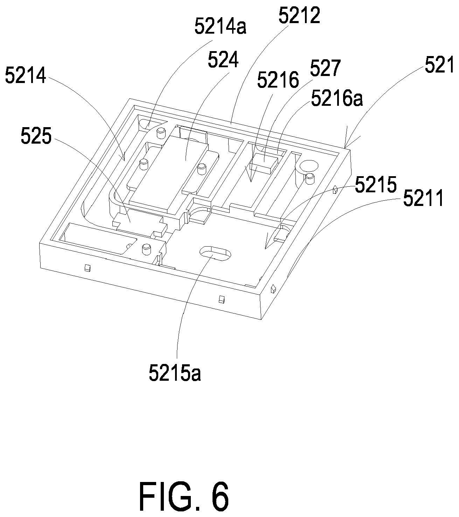

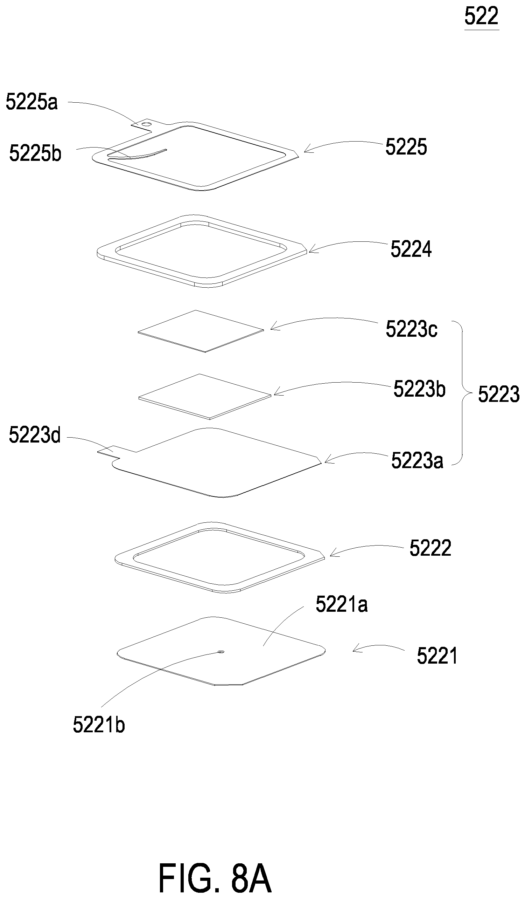

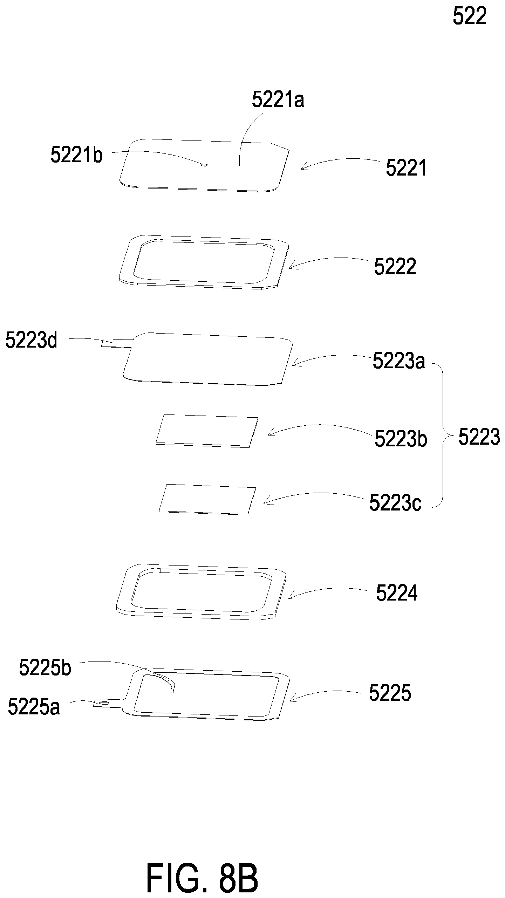

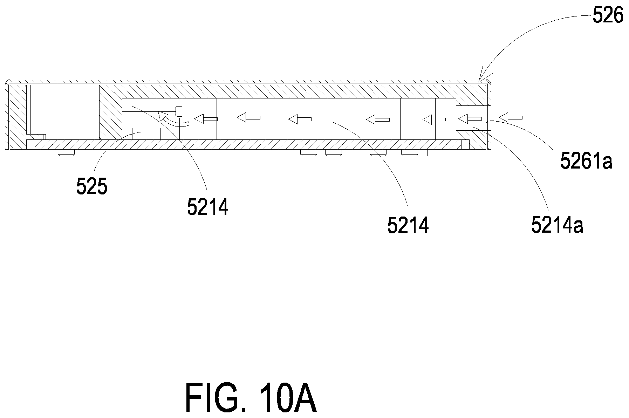

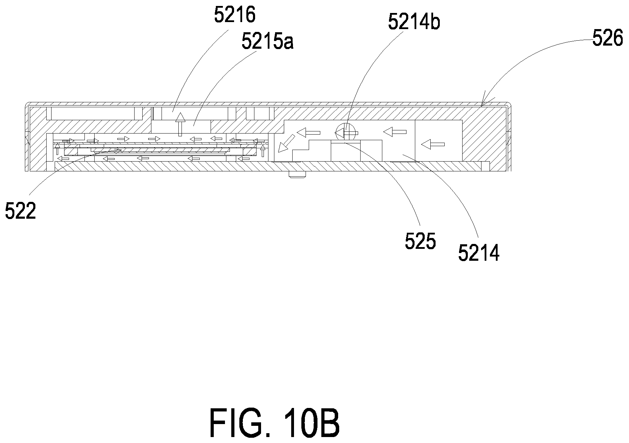

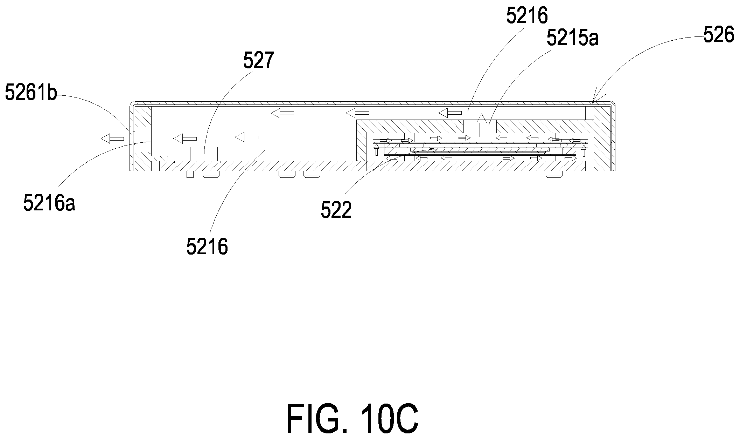

Please refer to FIG. 3A, FIG. 3B and FIG. 4 to FIG. 10C. The gas detection main part 52 includes a base 521, a piezoelectric actuator 522, a driving circuit board 523, a laser component 524, a particulate sensor 525, and an outer cover 526. In the embodiment, the base 521 includes a first surface 5211, a second surface 5212, a laser loading region 5213, a gas-inlet groove 5214, a gas-guiding-component loading region 5215 and a gas-outlet groove 5216. The first surface 5211 and the second surface 5212 are two surfaces opposite to each other. The laser loading region 5213 is hollowed out from the first surface 5211 toward the second surface 5212. The outer cover 526 covers the base 521 and includes a side plate 5261. The side plate 5261 has an inlet opening 5261a and an outlet opening 5261b. The gas-inlet groove 5214 is concavely formed from the second surface 5212 and disposed adjacent to the laser loading region 5213. The gas-inlet groove 5214 includes a gas-inlet 5214a and two lateral walls. The gas-inlet 5214a is in communication with an environment outside the base 521, and is spatially corresponding in position to an inlet opening 5261a of the outer cover 526. Two transparent windows 5214b are opened on the two lateral walls of the gas-inlet groove 5214 and are in communication with the laser loading region 5213. Therefore, the first surface 5211 of the base 521 is covered and attached by the outer cover 526, and the second surface 5212 is covered and attached by the driving circuit board 523, so that an inlet path is defined by the gas-inlet groove 5214.

In the embodiment, the gas-guiding-component loading region 5215 is concavely formed from the second surface 5212 and in communication with the gas-inlet groove 5214. A ventilation hole 5215a penetrates a bottom surface of the gas-guiding-component loading region 5215. The gas-guiding-component loading region 5215 includes four positioning protrusions 5215b disposed at four corners of the gas-guiding-component loading region 5215, respectively. In the embodiment, the gas-outlet groove 5216 includes a gas-outlet 5216a, and the gas-outlet 5216a is spatially corresponding to the outlet opening 5261b of the outer cover 526. The gas-outlet groove 5216 includes a first section 5216b and a second section 5216c. The first section 5216b is concavely formed out from the first surface 5211 in a region spatially corresponding to a vertical projection area of the gas-guiding-component loading region 5215. The second section 5216c is hollowed out from the first surface 5211 to the second surface 5212 in a region where the first surface 5211 is extended from the vertical projection area of the gas-guiding-component loading region 5215. The first section 5216b and the second section 5216c are connected to form a stepped structure. Moreover, the first section 5216b of the gas-outlet groove 5216 is in communication with the ventilation hole 5215a of the gas-guiding-component loading region 5215, and the second section 5216c of the gas-outlet groove 5216 is in communication with the gas-outlet 5216a. In that, when first surface 5211 of the base 521 is attached and covered by the outer cover 526 and the second surface 5212 of the base 521 is attached and covered by the driving circuit board 523, the gas-outlet groove 5216 and the driving circuit board 523 collaboratively define an outlet path.

In the embodiment, the laser component 524 and the particulate sensor 525 are disposed on and electrically connected to the driving circuit board 523 and located within the base 521. In order to clearly describe and illustrate the positions of the laser component 524 and the particulate sensor 525 in the base 521, the driving circuit board 523 is intentionally omitted. The laser component 524 is accommodated in the laser loading region 5213 of the base 521, and the particulate sensor 525 is accommodated in the gas-inlet groove 5214 of the base 521 and is aligned to the laser component 524. In addition, the laser component 524 is spatially corresponding to the transparent window 5214b, so that a light beam emitted by the laser component 524 passes through the transparent window 5214b and is irradiated into the gas-inlet groove 5214. A light beam path emitted from the laser component 524 passes through the transparent window 5214b and extends in an orthogonal direction perpendicular to the gas-inlet groove 5214. In the embodiment, a projecting light beam emitted from the laser component 524 passes through the transparent window 5214b and enters the gas-inlet groove 5214 to irradiate the suspended particles contained in the gas passing through the gas-inlet groove 5214. When the suspended particles contained in the gas are irradiated and generate scattered light spots, the scattered light spots are received and calculated by the particulate sensor 525, which is in an orthogonal direction perpendicular to the gas-inlet groove 5214, to obtain the gas detection information. The gas detection module 5 of the present disclosure further includes a gas sensor 527 positioned and disposed on the driving circuit board 523, electrically connected to the driving circuit board 523, and accommodated in the gas-inlet groove 5214, so as to detect the gas characteristics of the introduced gas. Preferably but not exclusively, in an embodiment, the gas sensor 527 includes a volatile-organic-compound sensor for detecting the information of carbon dioxide (CO₂) or volatile organic compounds (TVOC). Preferably but not exclusively, in an embodiment, the gas sensor 527 includes a formaldehyde sensor for detecting the information of formaldehyde (HCHO) gas. Preferably but not exclusively, in an embodiment, the gas sensor 527 includes a bacteria sensor for detecting the information of bacteria or fungi. Preferably but not exclusively, in an embodiment, the gas sensor 527 includes a virus sensor for detecting the information of virus in the gas.

In the embodiment, the piezoelectric actuator 522 is accommodated in the square-shaped gas-guiding-component loading region 5215 of the base 521. In addition, the gas-guiding-component loading region 5215 is in fluid communication with the gas-inlet groove 5214. When the piezoelectric actuator 522 is enabled, the gas in the gas-inlet groove 5214 is inhaled by the piezoelectric actuator 522, so that the gas flows into the piezoelectric actuator 522, and is transported into the gas-outlet groove 5216 through the ventilation hole 5215a of the gas-guiding-component loading region 5215. Moreover, the driving circuit board 523 covers the second surface 5212 of the base 521, and the laser component 524 is positioned and disposed on the driving circuit board 523, and is electrically connected to the driving circuit board 523. The particulate sensor 525 is also positioned and disposed on the driving circuit board 523 and electrically connected to the driving circuit board 523. In that, when the outer cover 526 covers the base 521, the inlet opening 5261a is spatially corresponding to the gas-inlet 5214a of the base 521, and the outlet opening 526lb is spatially corresponding to the gas-outlet 5216a of the base 521.

In the embodiment, the piezoelectric actuator 522 includes a gas-injection plate 5221, a chamber frame 5222, an actuator element 5223, an insulation frame 5224 and a conductive frame 5225. In the embodiment, the gas-injection plate 5221 is made by a flexible material and includes a suspension plate 5221a and a hollow aperture 5221b. The suspension plate 5221a is a sheet structure and is permitted to undergo a bending deformation. Preferably but not exclusively, the shape and the size of the suspension plate 5221a are corresponding to the inner edge of the gas-guiding-component loading region 5215, but not limited thereto. The hollow aperture 5221b passes through a center of the suspension plate 5221a, so as to allow the gas to flow therethrough. Preferably but not exclusively, in the embodiment, the shape of the suspension plate 5221a is selected from the group consisting of a square, a circle, an ellipse, a triangle and a polygon, but not limited thereto.

In the embodiment, the chamber frame 5222 is carried and stacked on the gas-injection plate 5221. In addition, the shape of the chamber frame 5222 is corresponding to the gas-injection plate 5221. The actuator element 5223 is carried and stacked on the chamber frame 5222 and collaboratively defines a resonance chamber 5226 with the chamber frame 5222 and the gas-injection plate 5221. The insulation frame 5224 is carried and stacked on the actuator element 5223 and the appearance of the insulation frame 5224 is similar to that of the chamber frame 5222. The conductive frame 5225 is carried and stacked on the insulation frame 5224, and the appearance of the conductive frame 5225 is similar to that of the insulation frame 5224. In addition, the conductive frame 5225 includes a conducting pin 5225a and a conducting electrode 5225b. The conducting pin 5225a is extended outwardly from an outer edge of the conductive frame 5225, and the conducting electrode 5225b is extended inwardly from an inner edge of the conductive frame 5225. Moreover, the actuator element 5223 further includes a piezoelectric carrying plate 5223a, an adjusting resonance plate 5223b and a piezoelectric plate 5223c. The piezoelectric carrying plate 5223a is carried and stacked on the chamber frame 5222. The adjusting resonance plate 5223b is carried and stacked on the piezoelectric carrying plate 5223a. The piezoelectric plate 5223c is carried and stacked on the adjusting resonance plate 5223b. The adjusting resonance plate 5223b and the piezoelectric plate 5223c are accommodated in the insulation frame 5224. The conducting electrode 5225b of the conductive frame 5225 is electrically connected to the piezoelectric plate 5223c. In the embodiment, the piezoelectric carrying plate 5223a and the adjusting resonance plate 5223b are made by a conductive material. The piezoelectric carrying plate 5223a includes a piezoelectric pin 5223d. The piezoelectric pin 5223d and the conducting pin 5225a are electrically connected to a driving circuit (not shown) on the driving circuit board 523, so as to receive a driving signal, such as a driving frequency and a driving voltage. Through this structure, a circuit is formed by the piezoelectric pin 5223d, the piezoelectric carrying plate 5223a, the adjusting resonance plate 5223b, the piezoelectric plate 5223c, the conducting electrode 5225b, the conductive frame 5225 and the conducting pin 5225a for transmitting the driving signal. Moreover, the insulation frame 5224 is insulated between the conductive frame 5225 and the actuator element 5223, so as to avoid the occurrence of a short circuit. Thereby, the driving signal is transmitted to the piezoelectric plate 5223c. After receiving the driving signal, the piezoelectric plate 5223c deforms due to the piezoelectric effect, and the piezoelectric carrying plate 5223a and the adjusting resonance plate 5223b are further driven to generate the bending deformation in the reciprocating manner.

Furthermore, in the embodiment, the adjusting resonance plate 5223b is located between the piezoelectric plate 5223c and the piezoelectric carrying plate 5223a and served as a cushion between the piezoelectric plate 5223c and the piezoelectric carrying plate 5223a. Thereby, the vibration frequency of the piezoelectric carrying plate 5223a is adjustable. Basically, the thickness of the adjusting resonance plate 5223b is greater than the thickness of the piezoelectric carrying plate 5223a, and the vibration frequency of the actuator element 5223 can be adjusted by adjusting the thickness of the adjusting resonance plate 5223b.

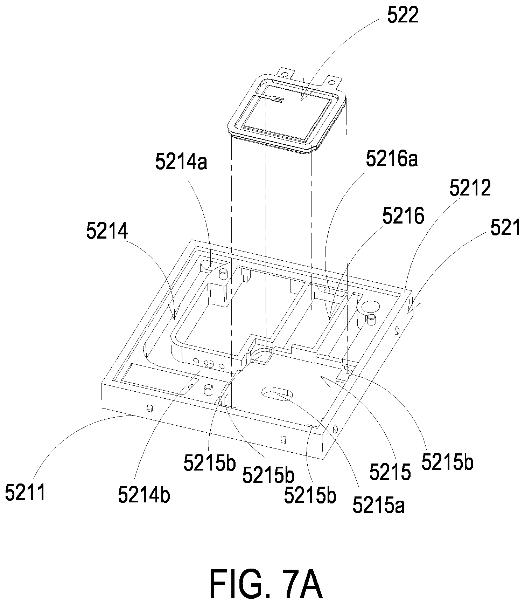

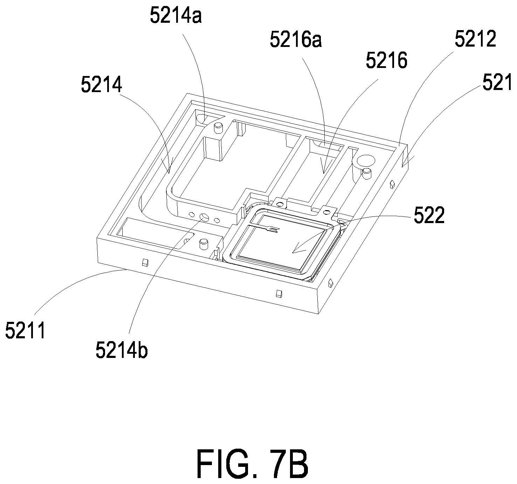

Please further refer to FIG. 7A, FIG. 7B, FIG.8A, FIG. 8B and FIG. 9A. In the embodiment, the gas-injection plate 5221, the chamber frame 5222, the actuator element 5223, the insulation frame 5224 and the conductive frame 5225 are stacked and positioned in the gas-guiding-component loading region 5215 sequentially, so that the piezoelectric actuator 522 is supported and positioned in the gas-guiding-component loading region 5215. A clearance 5221c is defined between the suspension plate 5221a and an inner edge of the gas-guiding-component loading region 5215 for gas flowing therethrough. In the embodiment, a flowing chamber 5227 is formed between the gas-injection plate 5221 and the bottom surface of the gas-guiding-component loading region 5215. The flowing chamber 5227 is in communication with the resonance chamber 5226 between the actuator element 5223, the chamber frame 5222 and the gas-injection plate 5221 through the hollow aperture 5221b of the gas-injection plate 5221. By controlling the vibration frequency of the gas in the resonance chamber 5226 to be close to the vibration frequency of the suspension plate 5221a, the Helmholtz resonance effect is generated between the resonance chamber 5226 and the suspension plate 5221a, so as to improve the efficiency of gas transportation. When the piezoelectric plate 5223c is moved away from the bottom surface of the gas-guiding-component loading region 5215, the suspension plate 5221a of the gas-injection plate 5221 is driven to move away from the bottom surface of the gas-guiding-component loading region 5215 by the piezoelectric plate 5223c. In that, the volume of the flowing chamber 5227 is expanded rapidly, the internal pressure of the flowing chamber 5227 is decreased to form a negative pressure, and the gas outside the piezoelectric actuator 522 is inhaled through the clearance 5221c and enters the resonance chamber 5226 through the hollow aperture 5221b. Consequently, the pressure in the resonance chamber 5226 is increased to generate a pressure gradient. When the suspension plate 5221a of the gas-injection plate 5221 is driven by the piezoelectric plate 5223c to move toward the bottom surface of the gas-guiding-component loading region 5215, the gas in the resonance chamber 5226 is discharged out rapidly through the hollow aperture 5221b, and the gas in the flowing chamber 5227 is compressed, thereby the converged gas is quickly and massively ejected out of the flowing chamber 5227 under the condition close to an ideal gas state of the Bernoulli's law, and transported to the ventilation hole 5215a of the gas-guiding-component loading region 5215.

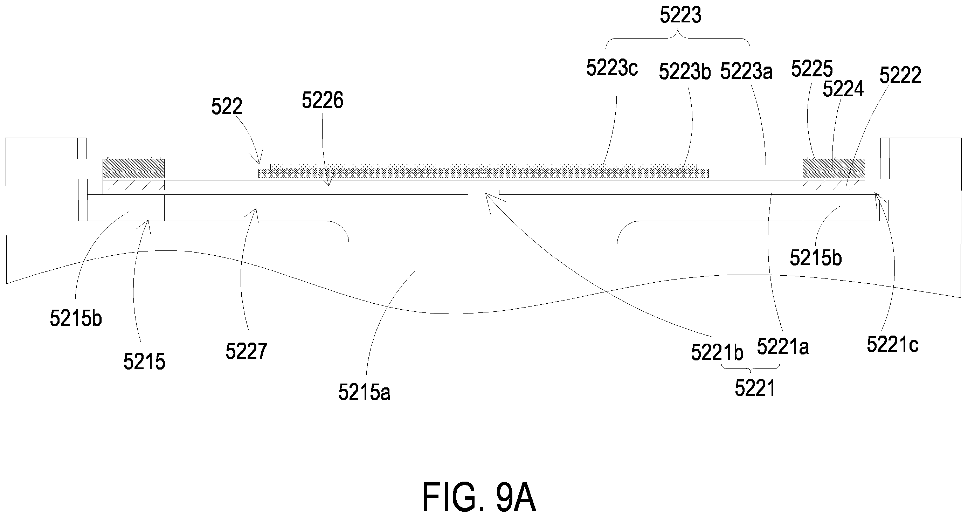

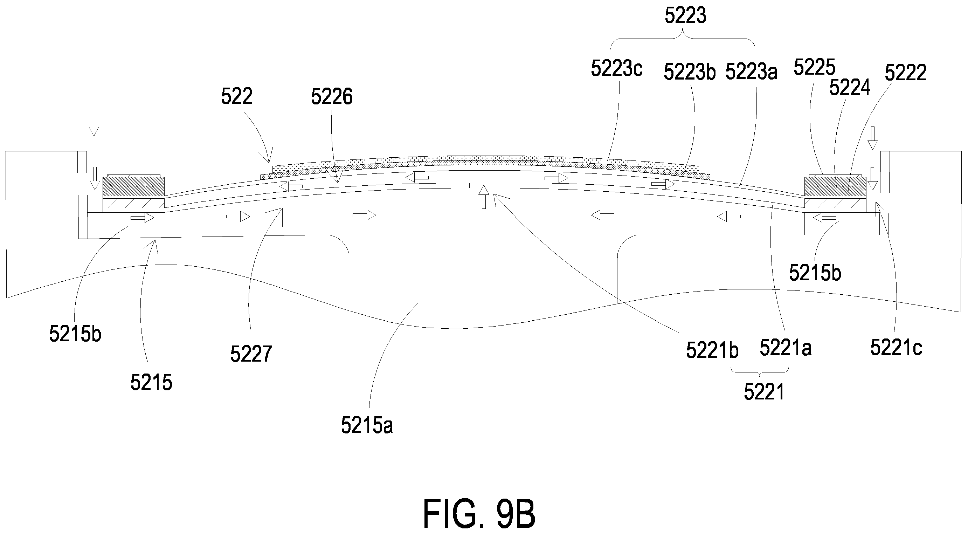

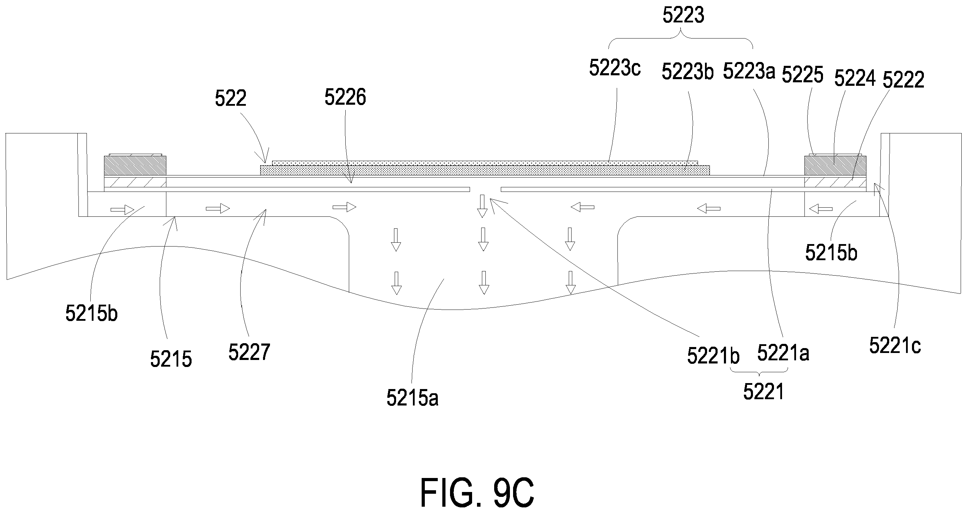

By repeating the above operation steps shown in FIG. 9B and FIG. 9C, the piezoelectric plate 5223c is driven to generate the bending deformation in a reciprocating manner. According to the principle of inertia, since the gas pressure inside the resonance chamber 5226 is lower than the equilibrium gas pressure after the converged gas is ejected out, the gas is introduced into the resonance chamber 5226 again. Moreover, the vibration frequency of the gas in the resonance chamber 5226 is controlled to be close to the vibration frequency of the piezoelectric plate 5223c, so as to generate the Helmholtz resonance effect to achieve the gas transportation at high speed and in large quantities. The gas is inhaled through the gas-inlet 5214a on the outer cover 526, flows into the gas-inlet groove 5214 of the base 521 through the gas-inlet 5214a, and is transported to the position of the particulate sensor 525. The piezoelectric actuator 522 is enabled continuously to inhale the gas into the inlet path, and facilitate the gas outside the gas detection module to be introduced rapidly, flow stably, and transported above the particulate sensor 525. At this time, a projecting light beam emitted from the laser component 524 passes through the transparent window 5214b to irritate the suspended particles contained in the gas flowing above the particulate sensor 525 in the gas-inlet groove 5214. When the suspended particles contained in the gas are irradiated and generate scattered light spots, the scattered light spots are received and calculated by the particulate sensor 525 for obtaining related information about the sizes and the concentration of the suspended particles contained in the gas. Moreover, the gas above the particulate sensor 525 is continuously driven and transported by the piezoelectric actuator 522, flows into the ventilation hole 5215a of the gas-guiding-component loading region 5215, and is transported to the gas-outlet groove 5216. At last, after the gas flows into the gas outlet groove 5216, the gas is continuously transported into the gas-outlet groove 5216 by the piezoelectric actuator 522, and thus the gas in the gas-outlet groove 5216 is pushed to discharge through the gas-outlet 5216a and the outlet opening 5261b.

The gas detection module 5 of the present disclosure not only includes the particulate sensor 525 to detect the particulate matters (such as PM1, PM2.5, PM10) in the gas, but also can detect the gas characteristics of the introduced gas, for example, to determine whether the gas is formaldehyde, ammonia, carbon monoxide, carbon dioxide, oxygen, ozone, or the like. Therefore, in some embodiments, the gas detection module 5 of the present disclosure further includes a gas sensor 527 positioned and disposed on the driving circuit board 523, electrically connected to the driving circuit board 523, and accommodated in the gas-outlet groove 5216, so as to detect the gas characteristics of the introduced gas. Preferably but not exclusively, in an embodiment, the gas sensor 527 includes a volatile-organic-compound sensor for detecting the information of carbon dioxide (CO₂) or volatile organic compounds (TVOC). Preferably but not exclusively, in an embodiment, the gas sensor 527 includes a formaldehyde sensor for detecting the information of formaldehyde (HCHO) gas. Preferably but not exclusively, in an embodiment, the gas sensor 527 includes a bacteria sensor for detecting the information of bacteria or fungi. Preferably but not exclusively, in an embodiment, the gas sensor 527 includes a virus sensor for detecting the information of virus in the gas.

Notably, the expandable cleaning device of the present disclosure includes at least one filtration element 2 disposed therein. In an embodiment, the filtration element includes a high efficiency particulate air (HEPA) filter screen. Preferably but not exclusively, the HEPA filter screen is a HEPA 13 filter screen with a dust containing capacity larger than 12000 mg. In an embodiment, the filtration element also includes an activated carbon having an absorptive capacity of formaldehyde larger than 1500 mg. The activated carbon is configured to remove organic and inorganic substances in the air pollution, and remove colored and odorous substances, so as to filter the air pollution with the absorptive capacity of formaldehyde larger than 1500 mg. In an embodiment, the filtration element includes a photo catalyst which is an ultraviolet lamp (UVC) having a power larger than 120 mW.

In conclusion, the present disclosure provides an expandable cleaning device which connects to the indoor air pollution prevention system for purifying the air pollution in the space of the indoor field to a level close to zero. After a required equivalent of CADR of the indoor field is decided by the indoor air pollution prevention system through the intelligent (AI) computation, and a number of the gas guider and an optimal CADR of the gas guider for achieving the required equivalent of CADR are decided according thereto an assembled expandable cleaning device complying with the required equivalent of CADR is formed by a corresponding number of the flow guiding main body to provide the expanded flow guiding path, which is formed by longitudinally/laterally extending the flow guiding pathway, for disposing the gas guider; at the same time, through the networking controller connecting to the indoor air pollution prevention system, the air quality of the indoor field can be monitored anytime and anywhere for activating and controlling the operation of the gas guider in real time; and also, the air pollution in the indoor field also can be detected to perform an intelligent comparison with the environment air quality, thereby adjusting the guiding air volume of the gas guider in real time based on the air quality, and thus effectively controlling the operation of the cleaning device in an energy saving manner. In addition, the optimal CADR of the gas guider in the flow guiding pathway is selected based on the upper limit of noise tolerance and the tolerance time of the indoor field, thereby reducing the operation noises of the gas guider in the indoor field. Accordingly, the assembled expandable cleaning device is capable of achieving the purification procedure for reaching cleanroom class with a level of air pollution close to zero through detecting the air pollution in real time, and thus achieving the optimal cost effectiveness thereof. Consequently, the present disclosure is industrial valuable.

## Claims

1. An expandable cleaning device, **characterized by** comprising:
a flow guiding main body (1) comprising a flow guiding pathway (11) capable of being extended in a longitudinal direction and/or in a lateral direction to form an expanded flow guiding path, wherein the flow guiding pathway (11) is fluidly communicated with at least one gas entrance (12) and at least gas exit (13) for guiding an air pollution into an indoor filed;
at least one filtration element (2) disposed in the flow guiding pathway (11) and covering the at least one gas entrance (12) for filtering the air pollution inhaling from the indoor field;
at least one gas guider (3) having a fixed Clean Air Delivery Rate (CADR) and disposed in the flow guiding pathway (11) for guiding the air pollution into the flow guiding pathway (11) to pass through the filtration element (2), so as to filter and clean the air pollution to a level close to zero; and
at least one networking controller (A) receiving a control instruction from an indoor air pollution prevention system (B) through a network communication for activating an operation of the gas guider (3),
wherein after a required equivalent of CADR of the indoor field is decided by the indoor air pollution prevention system (B) through an intelligent (AI) computation, and a number of the at least one gas guider (3) and an optimal CADR of each of the at least one gas guider (3) for achieving the required equivalent of CADR are decided according thereto, an assembled expandable cleaning device complying with the required equivalent of CADR is formed by a corresponding number of the flow guiding main body (1) to provide the expanded flow guiding path, which is formed by longitudinally/laterally extending the flow guiding pathway (11), for disposing the required number of the at least one gas guider (3), thereby achieving a purification procedure for reaching a cleanroom class with a level of the air pollution close to zero through detecting the air pollution in real time, and thus achieving an optimal cost effectiveness thereof.

2. The expandable cleaning device as claimed in claim 1, wherein the Clean Air Delivery Rate (CADR) of each of the at least one gas guider (3) is at least greater than 150 m³/h.

3. The expandable cleaning device as claimed in claim 1, wherein an arrangement of the at least one gas guider (3) and a selection of the optimal CADR of the at least one gas guider (3) are decided based on an upper limit of noise tolerance and a tolerance time of the indoor field, thereby reducing operation noises of the at least one gas guider (3) in the indoor field.

4. The expandable cleaning device as claimed in claim 1, wherein the networking controller (A) comprises a driver (4) and a gas detection module (5), wherein the driver (4) and the gas detection module (5) are electrically connected for controlling, the driver (4) receives the control instruction from the indoor air pollution prevention system (B) through the network communication for controlling an enablement and a disablement of the at least one gas guider (3), the gas detection module (5) detects the air pollution and outputs a gas detection data to the indoor air pollution prevention system (B) under a surveillance status, and performs a bidirectional communication with the indoor air pollution prevention system (B) through the network communication, the indoor air pollution prevention system (B) receives the gas detection data and performs an intelligent comparison for sending out a driving instruction, and the gas detection module (5) receives the driving instruction for controlling the enablement and the disablement of the at least one gas guider (3) and an air volume of the at least one gas guider (3).

5. The expandable cleaning device as claimed in claim 4, wherein the gas detection module (5) comprises a controlling circuit board (51), a gas detection main part (52), a microprocessor (53) and a communicator (54), wherein the gas detection main part (52), the microprocessor (53) and the communicator (54) are integrally packaged on the controlling circuit board (51) and electrically connected to the controlling circuit board (51), the microprocessor (53) controls a detection operation of the gas detection main part (52) and the gas detection main part (52) detects the air pollution and outputs a detection signal, the microprocessor (53) receives and processes the detection signal and outputs and provides air pollution data to the communicator (54) for externally transmitting to the indoor air pollution prevention system (B).

6. The expandable cleaning device as claimed in claim 5, wherein the gas detection main part (52) comprises:
a base (521) comprising:
a first surface (5211);
a second surface (5212) opposite to the first surface (5211);
a laser loading region (5213) hollowed out from the first surface (5211) to the second surface (5212);
a gas-inlet groove (5214) concavely formed from the second surface (5212) and disposed adjacent to the laser loading region (5213), wherein the gas-inlet groove (5214) comprises a gas-inlet (5214a) and two lateral walls, and a transparent window (5214b) is respectively opened on the two lateral walls for being in communication with the laser loading region (5213);
a gas-guiding-component loading region (5215) concavely formed from the second surface (5212) and in communication with the gas-inlet groove (5214), and having a ventilation hole (5215a) penetrated a bottom surface thereof; and
a gas-outlet groove (5216) concavely formed from a region of the first surface (5211) spatially corresponding to the bottom surface of the gas-guiding-component loading region (5215) and hollowed out from the first surface (5211) to the second surface (5212) in a region where the first surface (5211) is misaligned with the gas-guiding-component loading region (5215), wherein the gas-outlet groove (5216) is in communication with the ventilation hole (5215a) and comprises a gas-outlet (5216a) mounted thereon;
a piezoelectric actuator (522) accommodated in the gas-guiding-component loading region (5215);
a driving circuit board (523) covering and attaching to the second surface (5212) of the base (521);
a laser component (524) positioned and disposed on the driving circuit board (523) and electrically connected to the driving circuit board (523), and accommodated in the laser loading region (5213), wherein a light beam path emitted by the laser component (524) passes through the transparent window (5214b) and extends in an orthogonal direction perpendicular to the gas-inlet groove (5214);
a particulate sensor (525) positioned and disposed on the driving circuit board (523) and electrically connected to the driving circuit board (523), and accommodated in the gas-inlet groove (5214) at a region in an orthogonal direction perpendicular to the light beam path emitted by the laser component (524) for detecting suspended particles contained in the air pollution passing through the gas-inlet groove (5214) and irradiated by a light beam emitted from the laser component (524);
a gas sensor (527) positioned and disposed on the driving circuit board (523) and electrically connected to the driving circuit board (523), and accommodated in the gas-outlet groove (5216), so as to detect the air pollution introduced into the gas-outlet groove (5216); and
an outer cover (526) covering the base (521) and comprising a side plate (5261), wherein the side plate (5261) comprises an inlet opening (5261a) and an outlet opening (5261b), the inlet opening (5261a) is spatially corresponding to the gas-inlet (5214a) of the base (521) and the outlet opening (5261b) is spatially corresponding to the gas-outlet (5216a) of the base (521),
wherein the outer cover (526) covers the base (521), and the driving circuit board (523) covers the second surface (5212), so that an inlet path is defined by the gas-inlet groove (5214), and an outlet path is defined by the gas-outlet groove (5216), and wherein the air pollution outside the gas-inlet (5214a) of the base (521) is inhaled by the piezoelectric actuator (522) and transported into the inlet path defined by the gas-inlet groove (5214) through the inlet opening (5261a), and passes through the particulate sensor (525) for detecting a concentration of the suspended particles contained in the air pollution, and the air pollution is further transported to the outlet path defined by the gas-outlet groove (5216) through the ventilation hole (5215a), passes through the gas sensor (527) for detecting, and then is discharged through the outlet opening (5261b).

7. The expandable cleaning device as claimed in claim 1, wherein the at least one filtration element (2) comprises a high efficiency particulate air (HEPA) filter screen, and the HEPA filter screen is a HEPA 13 filter screen with a dust containing capacity larger than 12000 mg.

8. The expandable cleaning device as claimed in claim 1, wherein the at least one filtration element (2) comprises an activated carbon having an absorptive capacity of formaldehyde larger than 1500 mg, or the at least one filtration element (2) comprises a photo catalyst which is an ultraviolet lamp having a power larger than 120 mW.

9. The expandable cleaning device as claimed in claim 1, wherein the cleanroom class is represented by a cleanness of ZAPClean room 1~12.

10. The expandable cleaning device as claimed in claim 9, wherein a required equivalent of CADR per cubic meter for ZAPClean room 1 is in a range of 195000~370000 m³/h, a required equivalent of CADR per cubic meter for ZAPClean room 2 is in a range of 58000~115000 m³/h, a required equivalent of CADR per cubic meter for ZAPClean room 3 is in a range of 17500~35000 m³/h, and a required equivalent of CADR per cubic meter for ZAPClean room 4 is in a range of 5200~10000 m³/h.

11. The expandable cleaning device as claimed in claim 9, wherein a required equivalent of CADR per cubic meter for ZAPClean room 5 is in a range of 1500~3000 m³/h, a required equivalent of CADR per cubic meter for ZAPClean room 6 is in a range of 450~1000 m³/h, a required equivalent of CADR per cubic meter for ZAPClean room 7 is in a range of 135~300 m³/h, and a required equivalent of CADR per cubic meter for ZAPClean room 8 is in a range of 60~135 m³/h.

12. The expandable cleaning device as claimed in claim 9, wherein a required equivalent of CADR per cubic meter for ZAPClean room 9 is in a range of 35~80 m³/h, a required equivalent of CADR per cubic meter for ZAPClean room 10 is in a range of 15~40 m³/h, a required equivalent of CADR per cubic meter for ZAPClean room **11** is in a range of 10~30 m³/h, and a required equivalent of CADR per cubic meter for ZAPClean room 12 is in a range of 3~10 m³/h.
